(19) Europäisches Patentamt

European Patent Office

Office européen des brevets

(11) **EP 1 381 090 A1**

(12) **EUROPEAN PATENT APPLICATION**

(43) Date of publication:
**14.01.2004 Bulletin 2004/03**

(51) Int Cl.$^7$: **H01L 31/0232**, G01J 9/00

(21) Application number: **02254897.8**

(22) Date of filing: **11.07.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(71) Applicant: **Agilent Technologies, Inc. - a Delaware
corporation -
Palo Alto, CA 94303-0870 (US)**

(72) Inventor: **Harker, Andrew
Ipswich, Suffolk IP4 5QE (GB)**

(74) Representative: **Coker, David Graeme et al
Agilent Technologies UK Ltd,
Legal Dept,
Eskdale Road,
Winnersh Triangle
Wokingham, Berks RG41 5DZ (GB)**

(54) **Wavelength detector apparatus and method therefor**

(57) Known devices for detecting wavelengths of received light require discrete components which need to be placed with care and accurately aligned. Additionally, some known devices for detecting wavelengths have relatively large dimensions and do not lend themselves well to monolithic integration with other devices. The present invention provides a wavelength photodetector (100), for example, a p-i-n photodetector having a waveguide (110) disposed therein, the waveguide comprising a chirped Bragg grating (202) to provide wavelength selectivity. The waveguide photodetector (100) therefore generates a current linearly proportional to the wavelengths of light received. Advantageously, the waveguide photodetector can be integrally formed with other semiconductor devices and does not require precise alignment of discrete components.

*Fig. 2*

## Description

The present invention relates to an apparatus for detecting electromagnetic radiation of a predetermined wavelength, the apparatus being of the type used in a wavelength locker, for example of the type that generates an error signal for use in controlling a wavelength of a laser device. The present invention also relates to a method of detecting the electromagnetic radiation of the predetermined wavelength.

In a fibre-optic network, the wavelength of light used to communicate a signal is an important parameter. In particular, where Wavelength Division Multiplexing (WDM) systems are employed, different signals are communicated using respectively different wavelengths. Consequently, it is important to maintain the different wavelengths accurately in relation to components of the WDM system, for example multiplexers and demultiplexers, which add or remove wavelengths from the WDM system.

Typically, a semiconductor laser device is employed in a transmitter unit of the fibre-optic network. The wavelength of light transmitted by the laser device can be accurately controlled by altering a parameter, for example temperature, of the laser device using a closed loop feedback circuit. In this example, in order to determine whether to heat or cool the laser device, and to what extent, to restore the wavelength of the laser device to a predetermined wavelength, an error signal needs to be generated in the feedback circuit. Increasingly, tunable laser devices are employed in fibre-optic networks, the wavelength of light emitted by a tunable laser being controlled by at least one bias current flowing through one or more sections of the tunable laser. In such applications, the error signal is used to control the at least one bias current.

Known apparatus for detecting changes in the wavelength of the laser device are disclosed in US 4,309,671, US 6,144,025, US 5 825,792 and can be employed to derive the error signal. US 4,309,671 discloses a laser diode, a proximal beam splitting mirror and a proximal photodiode to receive light from the proximal beam splitting mirror. A distal beam splitting mirror is provided along with a distal photodiode to receive light from the distal beam splitting mirror, and a wavelength dependent element, for example a filter, is disposed between the distal beam splitting mirror and the distal photodiode. An electronic control circuit is also disclosed for stabilising the laser diode. When in use, a divergent beam of light is emitted by the laser diode. The proximal beam splitting mirror directs a proportion of the light incident upon the proximal beam splitting mirror onto the proximal photodiode. Similarly, undirected light passing through the proximal beam splitting mirror is incident upon the distal beam splitting mirror, the distal beam splitting mirror directing a proportion of the undirected light incident upon the distal beam splitting mirror onto the distal photodiode. Since the filter is a discrete component, a separate fabrication process from that used to make the laser and photodiodes is required, and precise placement and, in particular, alignment of the filter is necessary in order that the error signal can be derived accurately. Furthermore, in order to ensure that beams emanating from the proximal and distal beam splitting mirrors are not obstructed, the beam splitting mirrors and the photodiodes must be widely spaced apart. The provision of two beam splitting mirrors spaced apart and the need for individual placement and careful alignment of the beam splitting mirrors results in increased cost and size of the above apparatus. Similarly, the need to carefully place and align the proximal and distal photodiodes is a costly exercise that contributes to a disadvantageously sized apparatus. Additionally, the spacing of two beam splitting mirrors results in the proximal and distal photodiodes being unable to make efficient use of the proportions of light respectively directed towards them due to the divergent nature of the beam emitted by the laser diode, i.e. only a small fraction of the light respectively directed to the proximal and distal photodiodes is respectively received by the proximal and distal photodiodes.

US 5,825,792 discloses a relatively compact apparatus comprising a lens, a Fabry-Perot etalon and two photodiodes, the apparatus being small enough to be copackaged with a semiconductor laser in an industry standard package known as a "butterfly" package. The etalon splits light emitted by the semiconductor laser and propagates the light over multiple paths of different lengths before recombination. Respective phases are accumulated over the multiple paths, the phases accumulated being wavelength-dependent. Consequently, the result of the recombination also depends upon wavelength.

The dimensions of the etalon depend upon a required resolving power, R, of the etalon; the resolving power is a measure of a minimum change of wavelength that can be detected. The resolving power, R, of the etalon is given by the following equation:

$$R = F \frac{2nd}{\lambda_o}$$

where:

F is the coefficient of finesse,
$n$ is the refractive index of the etalon,
$d$ is the thickness of the etalon, and
$\lambda_o$ is the wavelength of operation.

As a practical example, in order to monitor a 100 GHz or 50 GHz channel spacing, at least one dimension of the etalon has to be approximately 1 mm or approximately 2 mm, respectively. Clearly, such dimensions are large compared with a typical dimension of a semiconductor laser of approximately 300 µm.

Consequently, to copackage the semiconductor laser device with the etalon requires a package that is substantially larger than a package for the semiconductor laser device alone, since for small channel spacings the dimensions of the etalon are large. Also, the etalon is formed by a separate fabrication process from the laser and the photodiodes and so requires very precise angular alignment with respect to the beam emitted by the laser device in order that the error signal can be derived accurately. Furthermore, no "transmitted beam" is provided for onward propagation into a WDM system. There is therefore a need to locate the apparatus of US 5,825,792 adjacent the back facet of the semiconductor laser, thereby restricting available space for other components as well as, in some cases, disadvantageously increasing lengths of Radio Frequency (RF) paths to the semiconductor laser.

US 6,144,025 discloses a laser diode coupled to a first optical fibre. When in use, light emitted by the laser diode propagates through the first optical fibre, a lens, a cut filter, after which the light is incident upon a beam splitter. A first photodiode is located on a first side of the beam splitter and a second photodiode is located on a second side of the beam splitter. An optical band-pass filter is disposed in-line between the beam splitter and the first photodiode. A proportion of the light incident upon the beam splitter is directed towards the first photodiode. A first proportion of the light directed towards the first photodiode is permitted to pass through to the first photodiode and a second proportion of the light directed towards the first photodiode is reflected by the optical band-pass filter to the second photodiode via the beam splitter. A certain proportion of the light incident upon the beam splitter via the cut filter is permitted to pass directly through the beam splitter to a lens that focuses the transmitted light into a second optical fibre. An electronic control circuit is provided to derive the error signal and control the wavelength of the light emitted by the laser diode.

The apparatus of US 6,144,025 requires that the first and second photodiodes are relatively widely separated, requiring individual placement and alignment. The relatively wide separation between the first and second photodiodes also results in a sub-optimally sized apparatus.

Furthermore, the beam splitter and the optical band-pass filter have to be aligned with angular precision, because light incident upon the second photodiode is reflected by the beam splitter and the optical band-pass filter. Small angular errors in the position of the beam splitter and the optical band-pass filter will cause the beam to be displaced laterally at the locations of the first and second photodiodes, resulting in the error signal being inaccurately derived.

According to a first aspect of the present invention, there is provided a waveguide photodetector device comprising a waveguide and a photodetector, the photodetector being responsive to electromagnetic radiation propagating in the waveguide, characterised in that the waveguide is arranged to limit substantially propagation in a first direction of electromagnetic radiation of a predetermined wavelength along the waveguide, a propagation distance of the electromagnetic radiation being dependent upon the predetermined wavelength.

Preferably, the photodetector comprises a p-i-n structure.

Preferably, the device further comprises a diffraction grating, the electromagnetic radiation propagating in the waveguide being influenced by the diffraction grating. More preferably, the diffraction grating is a Bragg grating. Optionally, the diffraction grating is blazed.

Preferably, the diffraction grating is chirped.

In one embodiment of the invention, a combined laser with waveguide photodetector device comprises a laser device and the wavelength detector apparatus as set forth above in accordance with the first aspect of the present invention.

Preferably, the laser device comprises a waveguide portion, the waveguide portion of the laser device being coupled to the waveguide of the photodetector.

Preferably, the laser device comprises a waveguide portion, the waveguide portion of the laser device being integrally formed with the waveguide of the photodetector.

Preferably, the combined laser and waveguide photodetector device further comprises an additional photodetector for power measurement, the additional photodetector also comprising a waveguide portion. More preferably, the laser device comprises a waveguide portion, the waveguide portion of the additional photodetector being coupled between the waveguide of the laser device and the waveguide portion of the photodetector. Alternatively, the laser device comprises a waveguide portion, the waveguide portion of the additional photodetector being located between, and integrally formed with, the waveguide portion of the laser device and the waveguide of the photodetector.

Preferably, the laser device comprises a waveguide portion, and further comprises a waveguide junction having a first input and a first output, the first input of the waveguide junction being coupled to the waveguide portion of the laser device. Alternatively, the laser device comprises a waveguide portion, and further comprises a waveguide junction having a first input and a first output, the first input of the waveguide junction being integrally formed with the waveguide portion of the laser device.

Preferably, the first output of the waveguide junction is coupled to the waveguide of the photodetector. Alternatively, the first output of the waveguide junction is integrally formed with the waveguide of the photodetector.

Preferably, the waveguide junction further comprises a second output, the second output being coupled to the waveguide portion of the additional photodetector. Alternatively, the waveguide junction further comprises a second output, the second output being integrally formed with the waveguide portion of the additional photodetector.

In another embodiment of the invention, a control loop apparatus for a laser device comprises the apparatus as set forth above in accordance with the first aspect of the present invention. A wavelength locker may comprise the control loop apparatus.

In yet another embodiment of the invention, a communications system comprises the apparatus as set forth above in accordance with the first aspect of the present invention.

According to a second aspect of the present invention, there is provided a method of detecting a wavelength of electromagnetic radiation using a waveguide photodetector device having a waveguide and a photodetector, the photodetector being responsive to electromagnetic radiation propagating in the waveguide, the method comprising the steps of: receiving electromagnetic radiation at a first end of the waveguide, and characterised by: substantially limiting propagation in a first direction of electromagnetic radiation of a predetermined wavelength along the waveguide, a propagation distance of the electromagnetic radiation being dependent upon the predetermined wavelength.

In a further embodiment of the invention, a method of controlling a wavelength of electromagnetic radiation emitted by a laser device comprising the steps of: detecting the wavelength of electromagnetic radiation emitted by the laser device as set forth above in accordance with the second aspect of the present invention; and controlling a parameter of the laser device in response to the wavelength of electromagnetic radiation detected by the wavelength photodetector device.

According to a third aspect of the present invention, there is provided a use of a chirped diffraction grating to enable a photodetector having a waveguide to detect a wavelength of electromagnetic radiation received. The chirped diffraction grating may be blazed.

It is thus possible to provide a wavelength detector apparatus comprising the photodetector and the waveguide portion, that can be fabricated together on a same substrate with a laser device as an integrated monolithic assembly using standard semiconductor fabrication techniques. Similarly, the method of detecting a wavelength of electromagnetic radiation enables the above mentioned fabrication of the photodetector and the waveguide portion together on the same substrate as the laser device. Manufacturing difficulties associated with known apparatus are therefore obviated, or at least mitigated. In particular, precise placement (including alignment) of discrete component is no longer necessary, since such discrete components are not longer required. Additionally, the overall dimensions of the apparatus are reduced and efficiency of use of electromagnetic radiation is increased.

At least one embodiment of the invention will now be described, by way of example, with reference to the accompanying drawings, in which:

Figure 1 is a schematic diagram of a waveguide photodetector constituting an embodiment of the invention;
Figure 2 is a schematic diagram of a waveguide of the waveguide photodetector of Figure 1;
Figure 3 is a schematic diagram of an alternative waveguide for the waveguide photodetector of figure 1;
Figure 4 is a longitudinal cross-sectional view of a tunable semiconductor laser integrated with the waveguide photodetector of Figure 1;
Figure 5 is a cut-away plan view of the integrated device of Figure 4; and
Figure 6 is a cut-away plan view of an alternative configuration of the integrated device of Figures 4 and 5.

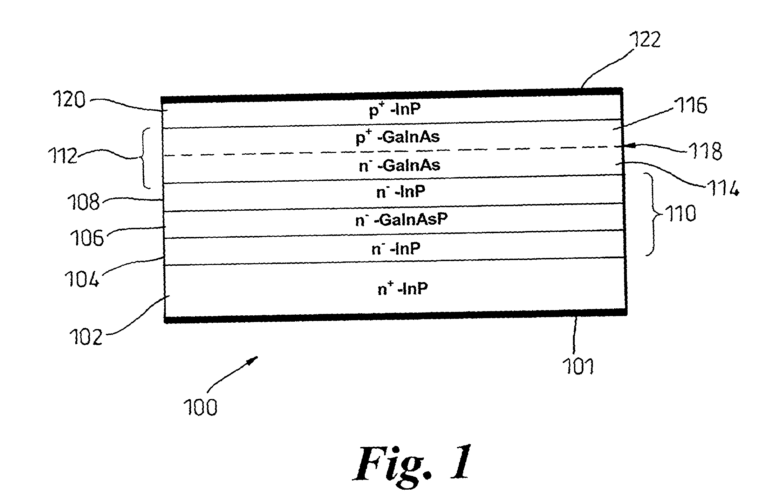

Referring to Figure 1, a waveguide photodetector 100 comprises an n$^+$ Indium Phosphide (InP) substrate 102 having a Gold-Germanium/Nickel (AuGe/Ni) ohmic n contact 101 disposed adjacent a first side thereof and a 1µm thick n$^-$ InP buffer layer 104 disposed upon a second side thereof. A 0.4µm n$^-$ Gallium Indium Arsenide Phosphide (GaInAsP) guiding layer 106 is adjacent the n$^-$ InP buffer layer 104, a 0.5µm thick n$^-$ InP cladding layer 108 being adjacent the n$^-$ GaInAsP guiding layer 106; together, the buffer layer 104, the guiding layer 106, and the cladding layer 108 define a stripe pattern (not shown) and constitute a waveguide stripe 110. The waveguide stripe 110 is disposed substantially centrally with respect to the lateral dimension of the substrate 102.

A 1.8µm thick n$^-$ Gallium Indium Arsenide (GaInAs) absorption layer 112 is disposed upon the capping layer 108, the absorption layer 112 comprising a first sub-layer 114 of n$^-$ GaInAs, and a second sub-layer 116 of p$^+$ GaInAs adjacent the first sub-layer 114; the adjacent first and second sub-layers 114, 116 form a p-n junction 118. A 0.8µm thick p$^+$ InP capping layer 120 is disposed upon the absorption layer 112 and a Platinum/Titanium/Platinum/Gold (Pt/Ti/Pt/Au) ohmic p contact 122 is disposed upon the capping layer 120. The n and p ohmic contacts 101, 122 can be coupled to a bias circuit (not shown).

It should be appreciated by those skilled in the art that the composition and thicknesses of the buffer, guiding, cladding, absorption and capping layers 104,106,108,112,120 of the above described waveguide photodetector 100 can be varied. In particular, the composition and thickness of the guiding layer 106 can be varied depending upon the wavelength of radiation to be guided. The thickness of the cladding layer 105 can be varied to control absorption of electromagnetic radiation by the absorption layer 112.

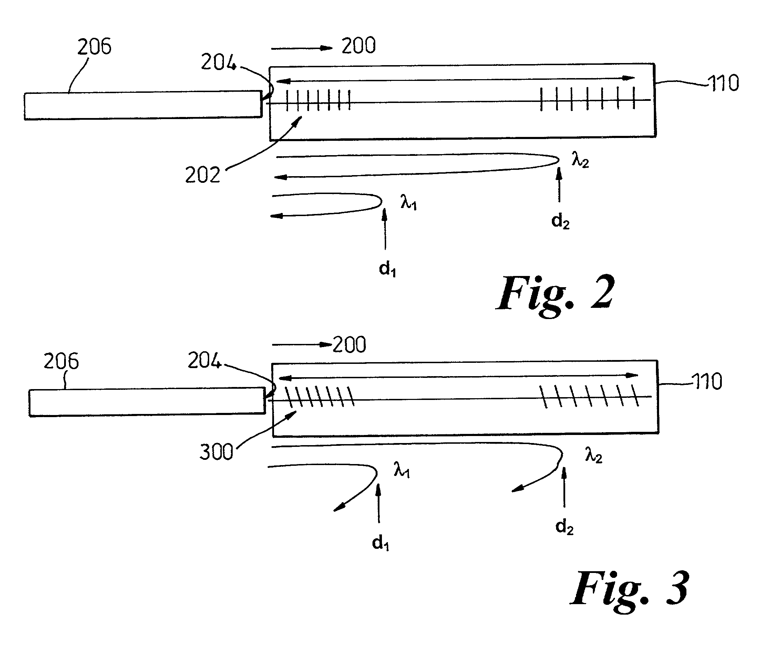

Referring to Figure 2, the waveguide stripe 110 is arranged to limit substantially, when light propagates therethrough, propagation in a first direction 200 of light of a first wavelength $\lambda_1$ to a first propagation distance $d_1$ into the waveguide stripe 110; light of a second wavelength $\lambda_2$ travelling in the first direction 200 is limited substantially to a second propagation distance $d_2$ into the waveguide stripe 110. The waveguide stripe 110 is therefore wavelength selective, the wavelength selectivity being provided, in this example, by incorporating a chirped Bragg grating 202 in the waveguide stripe 110, preferably, but not essentially, in the cladding layer 108. As will be readily appreciated, a Bragg grating comprises a periodic variation in the propagation constant, for example the refractive index, of the waveguide stripe 110 in the direction of propagation of light therethrough, i.e. longitudinally. The chirped Bragg grating differs from the Bragg grating described above in that the period of the propagation constant varies slowly and monotonically along the grating. As shown, the waveguide 110 is straight and the period of the chirped Bragg grating 202 varies along the waveguide stripe 110. It will be appreciated that there are other ways to make a chirped Bragg grating, including curving the waveguide stripe 100 whilst maintaining the period of the Bragg grating constant.

In order to launch light into the waveguide photodetector 100, a first end 204 of an optical fibre 206 can be optically coupled to the waveguide stripe 110, whilst a second end (not shown) is coupled to a source of light, the wavelength of which is to be detected.

In another embodiment (Figure 3), the chirped Bragg grating 202 of Figure 2 is replaced by a chirped blazed Bragg grating 300.

Manufacture of the waveguide photodetector 100 is as follows. Using a known Chloride Vapour Phase Epitaxy (Cl-VPE) technique the n⁺InP substrate 102 is grown. The n⁻InP buffer layer 104 is then grown upon the substrate 102 followed by the n⁻ GaInAsP guiding layer 106. Thereafter, a layer of photoresist (not shown) is spun-coated onto the guiding layer 106 and astripe pattern is then projected onto the layer of photoresist using a known photolithographic technique. Any unexposed photoresist is then washed away and the surface of the guiding layer 106 not covered by the photoresist is etched away to expose the substrate 104. Thereafter, the remaining, exposed, photoresist is removed to reveal an n⁻ GaInAsP stripe disposed upon an n⁻ InP stripe which together form part of the waveguide stripe 110 disposed upon the substrate 104. The n⁻ InP cladding layer 108 is then grown over the n⁻ GaInAsP and n⁻ InP stripe and the exposed surface of the substrate 102.

After forming the cladding layer 108, a pattern, for example, a corrugated pattern with a period varying in the direction in which light is to propagate when the waveguide photodetector 100 is in use, is etched into the cladding layer 108 thus causing the propagation constant of the waveguide 100 to vary in the direction of propagation of light therethrough. In order to blaze the Bragg grating as shown in Figure 3, a corrugated pattern in which the corrugations are angled so as to direct reflected light out of the waveguide 110 is etched into cladding layer 108. The methods of manufacture of the above described Bragg gratings are known from, for example, distributed feedback (DFB) lasers. Any suitable production technique can be employed and so will not be described herein in any detail.

The absorption layer 112 is then grown upon the cladding layer 108 and the capping layer 120 is grown on the absorption layer 112. Thereafter, the capping layer 120 is subjected to Zinc (Zn) diffusion , the Zinc diffusing into the capping layer 120, and the absorption layer 112 to a predetermined depth corresponding, in this example, to approximately half the thickness of the absorption layer 112, thereby creating the first and second sub-layers 114,116. The second sub-layer 116 and the capping layer 120 therefore become p⁺ doped.

After the Zn diffusion has taken place, the n and p ohmic contacts 101,122 are formed on the substrate 102 and capping layer 120, respectively.

In operation, the waveguide detector 100 is put in an operational mode by applying a reverse bias voltage across the first and second electrodes 102, 116 n contact 101 and the p contact 122 using the bias circuit. The bias circuit does not constitute a part of the above described waveguide photodetector 100 and so, for the purposes of simplicity and clarity of description, has not been shown in the figures or described in any detail. However, it should be appreciated that any suitable bias circuit, capable of applying an appropriate reverse bias voltage across the waveguide photodetector 100, can be coupled to the n contact 101 and the p contact 122.

Light is then launched into a side end of the waveguide stripe 110 from for example the optical fibre 206. In relation to the chirped Bragg grating of Figure 2, different wavelengths of light propagate as far as different respective propagation distances along the length of the waveguide stripe 110 depending upon each respective wavelength of light.

In relation to the first wavelength of light $\lambda_1$, when a geometric condition between the first wavelength $\lambda_1$ and the period of the chirped Bragg grating is met in an appropriate region along the length of the chirped Bragg grating, the chirped Bragg grating reflects the light of the first wavelength $\lambda_1$; wavelengths of light that do not satisfy the geometric condition at the appropriate region are transmitted by the chirped Bragg grating, i.e. permitted to continue propagating along the length of the chirped Bragg grating until the geometric condition is met, if at all, at some other region further along the chirped Bragg grating. Consequently, if the first wavelength $\lambda_1$ of the light is less than the second wavelength $\lambda_2$ of the light in this example, the first prop-

agation distance $d_1$ of the first wavelength $\lambda_1$ of the light is shorter than the second propagation distance $d_2$ of the second wavelength $\lambda_2$ of the light.

In the example of Figure 2, the light of the first and second wavelengths $\lambda_1$, $\lambda_2$ propagate substantially back along their respective propagation paths once their respective first and second propagation distances $d_1$, $d_2$ have been reached, i.e. their respective geometric conditions have been met with respect to the chirped Bragg grating. Therefore, in this example, light of the shortest wavelength is reflected substantially immediately at the end from which the light is launched, whilst light of the longest wavelength is reflected after propagating to a region near a distal end with respect to the end from which the light was launched.

Without the chirped Bragg grating, the waveguide photodetector 100 absorbs light substantially independently of wavelength, and the length of the waveguide 110 is several, for example three, times the distance the light has to propagate along the waveguide stripe 110 before the intensity of the light decreases to 1/e of the intensity of the light at the start of the propagation distance; the so-called "absorption length". Therefore, without the chirped Bragg grating, the waveguide photodetector 100 generates a current proportional to an amount of light absorbed.

With the chirped Bragg grating of the above example, light of the longest wavelength is substantially absorbed, while light of the shortest wavelength is slightly absorbed due to the propagation distance of the light of the longest wavelength being longer than the propagation distance of the light of the shortest wavelength. Consequently, the waveguide photodetector 100 generates a photocurrent having a substantially linear relationship with respect to the wavelength of the light.

If the light of the shortest wavelength is to be absorbed in preference to the light of the longest wavelength, the monotonic variation of the grating can be formed in reverse to that described above. The variation need not be linear. For example, the variation could change rapidly over a given distance at one or both ends of the grating and slow in the centre giving a wide wavelength 'capture range' and a narrow 'locking range'. Alternatively, a sampled grating could be used to give a periodic wavelength response. Such alterations are also applicable to the blazed chirped Bragg grating 300.

When the blazed chirped Bragg grating 300 is employed, instead of being reflected back along their respective propagation paths, the light of the first and second wavelengths $\lambda_1$, $\lambda_2$ are reflected back out of the sides of the waveguide stripe 110. Where reflections caused by the chirped Bragg grating 300 can cause adverse effects, for example, destabilise a source of light, the blazed chirped Bragg grating 300 is particularly advantageous.

In another embodiment, one of the above embodiments of the waveguide photodetector 100 is integrated with a source of electromagnetic radiation, for example a semiconductor laser, in order to detect the wavelength of the electromagnetic radiation. In this example, the chirped blazed Bragg grating 300 of Figure 3 is employed in order to avoid reflections of light affecting the correct operation of the laser diode.

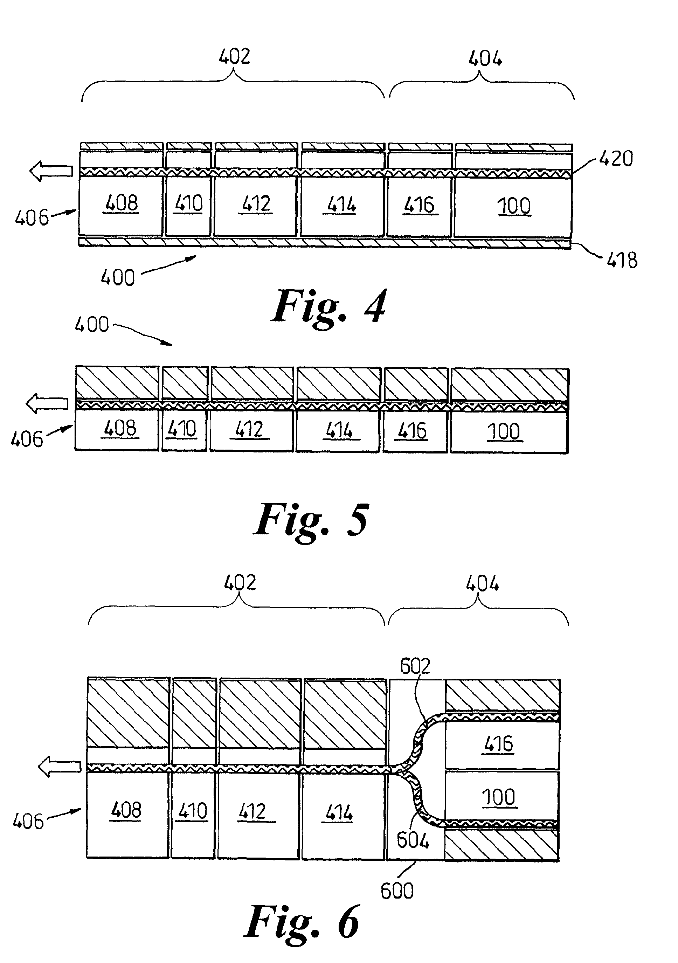

Referring to Figures 4 and 5, an integrated laser-waveguide photodetector 400 comprises a semiconductor laser section 402 and a detection section 404. The laser section 402 comprises a first side 406 from which light is emitted. The first side 406 is part of a first mirror sub-section 408, a gain sub-section 410 being disposed adjacent the first mirror sub-section 408. A phase shifting sub-section 412 is disposed adjacent the gain sub-section 410, a second mirror sub-section 414 being disposed adjacent the phase shifting sub-section 412.

A photodiode sub-section 416 forms part of the detection section 404 and is disposed adjacent the second mirror sub-section 414 of the laser section 402. In addition to the photodiode sub-section 416, the detection section 404 also comprises the waveguide photodetector 100. However, in this example, the n contact 101 of the waveguide photodetector 100 is part of a common electrode 418. The laser section 402 has a known structure, for example, as disclosed in US 4,896,325. The structures of the photodiode sub-section 416, is similar to that of the waveguide photodetector 100 described above, differing only in that the waveguide stripe 110 does not comprise the chirped Bragg grating 202 or the chirped blazed Bragg grating 300.

In the above example, the waveguide stripe 110 is part of a common waveguide stripe 420 extending through the waveguide photodetector 100, the photodiode sub-section 416 and the laser section 402. The coupling of light from the laser section 402 to the waveguide photodetector 100 is achieved by integrally forming the waveguide stripe 110 with the waveguide of the photodiode sub-section 416, or if the photodiode sub-section 416 is not employed, directly with the waveguide of the laser section 402 or a waveguide of one or more intermediate device disposed between the laser section 402 and the waveguide photodetector 100. Alternatively, the waveguide stripe 110 can be coupled to the waveguide of the laser section 402 using any known suitable coupling techniques, or if the photodiode sub-section 416 is not employed, directly with the waveguide of the laser section 402 or a waveguide of the one or more intermediate device disposed between the laser section 402 and the waveguide photodetector 100, again using any known suitable coupling technique.

Referring to Figure 6, instead of coupling the waveguide photodetector 100 in series with the photodiode 416 (or the one or more intermediate device), the laser section 402 can be coupled to, or integrally formed with, a wavelength independent waveguide Y-junction 600 comprising a first branch 602 coupled to, or integrally formed with, the photodiode sub-section 416 and a second branch 604 coupled to, or integrally formed with, the waveguide photodetector 100.

The above described embodiments of the wavelength photodetector 100 provide, when in use, feedback as to the wavelength of light propagating through the waveguide stripe 110. In the examples incorporating the laser section 402, the light propagating through the waveguide stripe 110 originates from the laser section 402. The provision of the photodetector subsection 416 enables constant power feedback in addition to the wavelength feedback described above. The wavelength and/or constant power feedback can be used by a suitable control circuit to control one or more parameters of the laser section 402, for example bias current(s) and/or temperature of the laser section 402, thereby controlling the wavelength of the light emitted by the laser section 402, or if the laser section 402 is not employed as described above, a source of light.

Although not described above, it should be appreciated that the structure of the laser section 402 can differ from that described above. By way of illustration, the structure of the laser section 402 can be substantially in accordance with that disclosed in "Spectral Characteristics Of 1.5 $\mu$m DBR DC-PBH Laser With Frequency Tuning Region" (Murata et al, IEEE Semiconductor Laser Conference B-3 (1983)). Similarly, the basic structure of the waveguide photodetector 100, i.e. without the provision of the Bragg gratings described above, can be in accordance with other known structures, for example, as disclosed in: "Optical circuits and integrated detectors" (M. Erman *et al,* IEE Proceedings - J (Optoelectronics), Vol. 138, No.2, April 1991), "Monolithic Integrated InGaAIAs/InP Ridge Waveguide Photodiodes" (P Cinguino, F Genova, C Rigo, A Stano, Proceedings of the SPIE - The International Society for Optical Engineering, Volume 836, pages 114-119, 1988), or "Waveguide - Integrated Pin Photodiode on InP" (C Bornholdt et al, Electronics Letters, Jan 2, 1987, Volume 23, No 1, pages 2-4).

The above embodiments have been described in the context of "light". However, it should be appreciated that the above embodiments are applicable to electromagnetic radiation of wavelengths between about 300 nm and 10 $\mu$m. For example, the electromagnetic radiation can be between about 400 nm and 2 $\mu$m, such as between about 800 nm and 1700 nm.

**Claims**

1. A waveguide photodetector device (100) comprising a waveguide (110) and a photodetector, the photodetector being responsive to electromagnetic radiation propagating in the waveguide (110), **characterised in that** the waveguide (110) is arranged to limit substantially propagation in a first direction (200) of electromagnetic radiation of a predetermined wavelength ($\lambda_1$) along the waveguide (110),

a propagation distance ($d_1$) of the electromagnetic radiation being dependent upon the predetermined wavelength ($\lambda_1$).

2. A device as claimed in Claim 1, further comprising a diffraction grating, the electromagnetic radiation propagating in the waveguide (110) being influenced by the diffraction grating.

3. A device as claimed in Claim 2, wherein the diffraction grating is a Bragg grating (202, 300).

4. A device as claimed in Claim 2 or Claim 3, wherein the diffraction grating is blazed (300).

5. A device as claimed in any one of Claims 2 to 4, wherein the diffraction grating (202, 300) is chirped.

6. A combined laser with waveguide photodetector device (400), comprising a laser device (402), and the waveguide photodetector device (100) as claimed in any one of the preceding claims.

7. A device as claimed in Claim 6, wherein the laser device (402) comprises a waveguide portion, the waveguide portion of the laser device (402) being coupled to the waveguide (110) of the photodetector.

8. A device as claimed in Claim 6 or Claim 7, wherein the laser device (402) comprises a waveguide portion (110), the waveguide portion of the laser device (402) being integrally formed with the waveguide (110) of the photodetector.

9. A device as claimed in Claim 6, further comprising an additional photodetector (416) for power measurement, the additional photodetector (416) also comprising a waveguide portion.

10. A device as claimed in Claim 9, wherein the laser device (402) comprises a waveguide portion, the waveguide portion of the additional photodetector (416) being coupled between the waveguide portion of the laser device (402) and the waveguide (110) of the photodetector.

11. A device as claimed in Claim 9, wherein the laser device (402) comprises a waveguide portion, the waveguide portion of the additional photodetector (416) being located between, and integrally formed with, the waveguide portion of the laser device (402) and the waveguide (110) of the photodetector.

12. A device as claimed in Claim 6 or Claim 9, wherein the laser device (402) comprises a waveguide portion, and further comprises a waveguide junction (600) having a first input and a first output, the first input of the waveguide junction (600) being coupled to the waveguide portion of the laser device (402).

13. A device as claimed in Claim 6 or Claim 9, wherein the laser device (402) comprises a waveguide portion, and further comprises a waveguide junction (600) having a first input and a first output, the first input of the waveguide junction (600) being integrally formed with the waveguide portion of the laser device (402).

14. A device as claimed in Claim 12 or Claim 13, wherein the first output of the waveguide junction (600) is coupled to the waveguide of the photodetector (100).

15. A device as claimed in Claim 12 or Claim 13, wherein the first output of the waveguide junction (600) is integrally formed with the waveguide of the photodetector (100).

16. A device as claimed in Claim 12 or Claim 13, when dependent upon Claim 9, wherein the waveguide junction (600) further comprises a second output, the second output being coupled to the waveguide portion of the additional photodetector (416).

17. A device as claimed in Claim 12 or Claim 13, when dependent upon Claim 9, wherein the waveguide junction (600) further comprises a second output, the second output being integrally formed with the waveguide portion of the additional photodetector (416).

18. A method of detecting a wavelength of electromagnetic radiation using a waveguide photodetector device (100) having a waveguide (110) and a photodetector, the photodetector being responsive to electromagnetic radiation propagating in the waveguide (110) the method comprising the steps of:

   receiving electromagnetic radiation at a first end of the waveguide (110), and **characterised by**:

   substantially limiting propagation in a first direction (200) of electromagnetic radiation of a predetermined wavelength ($\lambda_1$) along the waveguide (110), a propagation distance ($d_1$) of the electromagnetic radiation being dependent upon the predetermined wavelength ($\lambda_1$).

19. A method of controlling a wavelength of electromagnetic radiation emitted by a laser device (402) comprising the steps of:

detecting the wavelength of electromagnetic radiation emitted by the laser device (402) in accordance with the method as claimed in Claim 18; and
controlling a parameter of the laser device (402) in response to the wavelength of electromagnetic radiation detected by the waveguide photodetector device.

20. A use of a chirped diffraction grating (202) to enable a photodetector having a waveguide (110) to detect a wavelength of electromagnetic radiation received.

p⁺-InP
p⁺-GaInAs
n⁻-GaInAs
n⁻-InP
n⁻-GaInAsP
n⁻-InP
n⁺-InP

*Fig. 1*

EP 1 381 090 A1

206 204 → 200 110

202

$\lambda_2$

$d_2$

$\lambda_1$

$d_1$

*Fig. 2*

206 204 → 200 110

300

$\lambda_1$ $\lambda_2$

$d_1$ $d_2$

*Fig. 3*

402    404

420

406    408  410  412  414  416  100

400    418

## Fig. 4

400

406    408  410  412  414  416  100

## Fig. 5

402    404

602

406    408  410  412  414    416

100

604

600

## Fig. 6

**European Patent Office**

**EUROPEAN SEARCH REPORT**

Application Number

EP 02 25 4897

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 01 94896 A (MURGATROYD IAN JOHN ;SUGDEN CATHERINE ANNE (GB); CHISHOLM KAREN EL) 13 December 2001 (2001-12-13) * pages 8-10; 20-22 * | 1-8, 12-15, 18-20 | H01L31/0232 G01J9/00 |
| X | EP 0 422 854 A (AMERICAN TELEPHONE & TELEGRAPH) 17 April 1991 (1991-04-17) * column 5, line 11-58; figure 4 * | 1,2, 18-20 | |
| A | PATENT ABSTRACTS OF JAPAN vol. 2002, no. 02, 2 April 2002 (2002-04-02) & JP 2001 290039 A (KDDI CORP), 19 October 2001 (2001-10-19) * abstract * | 1,18 | |
| A | DE 196 33 569 A (INST PHYSIKALISCHE HOCHTECH EV) 26 February 1998 (1998-02-26) * abstract * | 1,18 | |
| A | US 6 185 233 B1 (DUGAN JOHN M ET AL) 6 February 2001 (2001-02-06) * column 3, line 3-40; figure 1 * | 1,6,9 | TECHNICAL FIELDS SEARCHED (Int.Cl.7) G01J H01L H01S |

The present search report has been drawn up for all claims

| Place of search | Date of completion of the search | Examiner |
|---|---|---|
| THE HAGUE | 17 December 2002 | De Buyzer, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**            EP 02 25 4897

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2002

| Patent document cited in search report | | Publication date | Patent family member(s) | | Publication date |
|---|---|---|---|---|---|
| WO 0194896 | A | 13-12-2001 | GB | 2365119 A | 13-02-2002 |
| | | | AU | 6048101 A | 17-12-2001 |
| | | | WO | 0194896 A1 | 13-12-2001 |
| EP 0422854 | A | 17-04-1991 | US | 5029297 A | 02-07-1991 |
| | | | DE | 69021484 D1 | 14-09-1995 |
| | | | DE | 69021484 T2 | 01-02-1996 |
| | | | EP | 0422854 A2 | 17-04-1991 |
| | | | JP | 2971551 B2 | 08-11-1999 |
| | | | JP | 3198032 A | 29-08-1991 |
| JP 2001290039 | A | 19-10-2001 | NONE | | |
| DE 19633569 | A | 26-02-1998 | DE | 19633569 A1 | 26-02-1998 |
| US 6185233 | B1 | 06-02-2001 | EP | 1061618 A2 | 20-12-2000 |